Europäisches Patentamt

European Patent Office

Office européen des brevets

(11) Veröffentlichungsnummer: **0 347 566**
**A2**

(12) **EUROPÄISCHE PATENTANMELDUNG**

(21) Anmeldenummer: 89107891.7

(51) Int. Cl.⁴: **C01B 21/072**

(22) Anmeldetag: 29.04.89

(30) Priorität: 23.06.88 DE 3821185
03.01.89 DE 3900065

(43) Veröffentlichungstag der Anmeldung:
27.12.89 Patentblatt 89/52

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Peters, Dieter, Dr.
Schaesbergstrasse 3
D-5030 Hürth(DE)
Erfinder: Heymer, Gero, Dr.
Fasanenaue 12
D-5042 Erftstadt(DE)
Erfinder: Christian, May
Berliner Strasse 1
D-5042 Erftstadt(DE)

(54) Aluminiumnitridpulver und Verfahren zu seiner Herstellung.

(57) Ein Aluminiumnitridpulver weist eine pulverdiffraktometrisch gemessene und nach der Methode von Scherrer ausgewertete Kristallitgröße von 40 bis 150 nm, eine Primärteilchengröße von 0,1 bis 0,5 μm, eine spezifische Oberfläche nach BET von 5 bis 50 m²/g und einen Weißgrad von mehr als 91 %, gemessen mit Licht einer Wellenlänge von 400 bis 700 nm gegen Bariumsulfat p.a. als Weißstandard, auf.

Zur Herstellung dieses Aluminiumnitridpulvers schmilzt man zunächst metallisches Aluminium zusammen mit Monamminaluminiumchlorid [AlCl₃(NH₃)] in Inertgasatmosphäre bei Temperaturen oberhalb von 125°C auf und läßt unter Wasserstoffentwicklung miteinander reagieren. Dann führt man der alminiumhaltigen Monamminaluminiumchlorid-Schmelze bei Temperaturen zwischen 250 und 400°C pro Mol Monamminalumini-umchlorid 8 bis 20 g Ammoniak pro Stunde unter Ausfällung von Aluminiumnitrid als Feststofff bis zum vollständigen Umsatz des Aluminiums zu. Schließlich erhöht man die Temperatur der Schmelze auf mehr als 400°C.

EP 0 347 566 A2

EP 0 347 566 A2

## Aluminiumnitridpulver und ein Verfahren zu seiner Herstellung

Die vorliegende Erfindung betrifft Aluminiumnitridpulver und ein Verfahren zu seiner Herstellung, wobei man metallisches Aluminium zusammen mit Monamminaluminiumchlorid [$AlCl_3(NH_3)$] in Inertgasatmosphäre bei Temperaturen oberhalb von 125°C aufschmilzt und unter Wasserstoffentwicklung miteinander reagieren läßt.

Aluminiumnitridpulver sind zur Herstellung von Keramikteilen zur Anwendung im Elektronikbereich von Interesse, da Aluminiumnitrid ein sehr guter Wärmeleiter und gleichzeitig ein guter elektrischer Isolator ist.

Aluminiumnitridpulver werden technisch im allgemeinen durch direkte Nitridierung von Aluminium hergestellt, wobei von Nachteil ist, daß diese Verfahren auf eine Umsetzung zwischen einer festen und einer gasförmigen Phase beruhen und mit einem hohen Mahlaufwand und relativ niedrigem Nitridierungsgrad des Aluminiums verbunden sind.

Weiterhin ist bekannt, Monamminaluminiumchlorid und metallisches Aluminium in Argon- oder Ammoniakatmosphäre im molaren Verhältnis von Aluminium zu Monamminaluminiumchlorid von 0,25 bis 3,0 bei Temperaturen zwischen 27 und 427°C unter Abscheidung von Wasserstoff umzusetzen. Das dabei gebildete Aluminiumimidochlorid wird bei Temperaturen um 1100°C in Aluminiumnitrid überführt (vergl. Journal für angewandte Chemie (Moskau), No. 2, 1988, Seiten 249 bis 254). Hierbei sind die langen Reaktionszeiten nachteilig.

Es ist daher Aufgabe der vorliegenden Erfindung, ein insbesondere für Keramikteile zur Anwendung im Elektronikbereich geeignetes Aluminiumnitridpulver sowie ein Verfahren zu seiner Herstellung anzugeben, welches ausgehend von metallischem Aluminium einen hohen Nitridierungsgrad aufweist und bei welchem das metallische Aluminium mit Monamminaluminiumchlorid in Inertgasatmosphäre bei Temperaturen oberhalb von 125°C aufgeschmolzen wird. Dabei ist das erfindungsgemäße Aluminiumnitrid durch eine pulverdiffraktometrisch gemessene und nach der Methode von Scherrer ausgewertete Kristallitgröße von 40 bis 150 nm, vorzugsweise 70 bis 120 nm, eine Primärteilchengröße von 0,1 bis 0,5 $\mu$m, eine spezifische Oberfläche nach BET von 5 bis 50 $m^2$/g und einen Weißgrad von mehr als 91 %, gemessen mit Licht einer Wellenlänge von 400 bis 700 nm gegen Bariumsulfat p.a. als Weißstandard gekennzeichnet, während man beim erfindungsgemäßen Verfahren der aluminiumhaltigen Monoamminaluminiumchlorid-Schmelze bei Temperaturen zwischen 250 und 400°C, vorzugsweise zwischen 280 und 360°C, pro Mol Monamminaluminiumchlorid 8 bis 20 g, vorzugsweise 12 bis 15 g Ammoniak pro Stunde unter Ausfällung von Aluminiumnitrid als Feststoff bis zum vollständigen Umsatz des Aluminiums zuführt und daß man schließlich die Temperatur der Schmelze auf mehr als 400°C, vorzugsweise auf 420 bis 600°C erhöht.

Das Verfahren gemäß der Erfindung kann weiterhin wahlweise noch dadurch ausgestaltet sein, daß man

a) der Monamminaluminiumchlorid-Schmelze soviel metallisches Aluminium zusetzt, daß das Molverhältnis Aluminium zu Monamminaluminiumchlorid 0,5 bis 1,2, vorzugsweise 0,9 bis 1,1,beträgt und daß man das Einleiten von Ammoniak in die festes metallisches Aluminium enthaltende Schmelze so lange fortsetzt, bis das gesamte der Schmelze zugesetzte metallische Aluminium unter gleichzeitiger Ausfällung von Aluminiumnitrid von der Schmelze aufgenommen worden ist und sich mit dem Ammoniak zu Aluminiumnitrid umgesetzt hat;

b) unter Einhaltung eines Molverhältnisses von Gesamt-Aluminium zu Gesamt-Monamminaluminiumchlorid von (o,5 bis 1,2) : 1 im Reaktionssystem 30 bis 70 Mol% des Monamminaluminiumchlorids durch Aluminiumchlorid oder Ammoniumchlorid oder deren Mischungen ersetzt;

c) pro Zeiteinheit nur soviel Ammoniak zuführt, daß die Ammoniakkonzentration im entweichenden Wasserstoff weniger als 0,3 % und der Ammoniaküberschuß in der Schmelze nach vollständigem Aluminiumsatz maximal 0,5, vorzugsweise weniger als 0,2 Mol Ammoniak pro Mol Monamminaluminiumchlorid beträgt;

d) der Monamminaluminiumchlorid-Schmelze nach vollständigem Umsatz des Aluminiums soviel Ammoniak zuführt, daß pro Mol eingesetztem Monamminaluminiumchlorid 1 bis 3, vorzugsweise 1,5 bis 2,5 Mol Ammoniak aufgenommen werden, bevor die Temperatur auf über 400°C erhöht wird;

e) das Aluminium in Form von Stäben, Blöcken oder Granalien einsetzt;

f) das ausgefällte Aluminiumnitrid von der Monamminaluminiumchlorid-Schmelze durch Filtration abtrennt;

g) das geschmolzene Monamminaluminiumchlorid vom ausgefällten Aluminiumnitrid abdestilliert;

h) das Abdestillieren des Monamminaluminiumchlorids im Vakuum oder unter Inertgas unter Ausbildung von Aluminiumnitrid-Agglomeraten mit $d_{50}$ > 10 $\mu$m vornimmt;

i) das Abdestillieren des Monamminaluminiumchlorids unter Ammoniak unter Ausbildung von Aluminiumnitrid-Agglomeraten mit $d_{50}$ < 10 $\mu$m, vorzugsweise < 5 $\mu$m, vornimmt;

2

j) das abgetrennte Aluminiumnitrid bei Temperaturen zwischen 400 bis 1500° C tempert;

k) die Temperung unter Inertgas oder Ammoniak oder deren Mischungen vornimmt.

Das erfindungsgemäße Aluminiumnitridpulver weist einen höheren Weißgrad, einen höheren Nitridierungsgrad, eine höhere spezifische Oberfläche, kleinere Kristallitgrößen und kleinere Primärteilchengrößen als im Handel erhältliche Aluminiumnitridpulver auf.

Beim erfindungsgemäßen Verfahren empfiehlt es sich, als Inertgas Stickstoff, Wasserstoff, Edelgase oder deren Mischungen zu verwenden, während beim Einsatz des Aluminiums in Form von Stäben, Blöcken oder Granalien quantitative Ausbeuten bei gleichmäßiger Umsatzrate erzielt werden.

Wenn man beim Verfahren gemäß der Erfindung das Monamminaluminiumchlorid im Vakuum oder in Inertgasatmosphäre destillativ entfernt, so können große Aluminiumnitrid-Agglomerate ($d_{50} > 10$ μm) erhalten werden; entfernt man jedoch das Monamminaluminiumchlorid in Ammoniakatmosphäre (> 0,5 Mol Ammoniak pro Mol Monamminaluminiumchlorid), so werden kleine, leicht zerfallende Aluminiumnitrid-Agglomerate ($d_{50} < 5$ μm) erhalten.

Beim erfindungsgemäßen Verfahren kann die Viskosität der aluminiumhaltigen Monamminaluminiumchlorid-Schmelze, in welcher Aluminiumnitrid suspendiert ist, dadurch niedrig gehalten werden, daß im Reaktionssystem ein Einsatzverhältnis von Aluminium zu Monamminaluminiumchlorid von 0,5 bis 1,2 gewählt wird sowie die zugeführte Ammoniakmenge bis zu 20 g pro Stunde und Mol Monamminaluminiumchlorid und der Ammoniaküberschuß weniger als 0,5 Mol pro Mol Monamminaluminiumchlorid beträgt.

In der folgenden Tabelle werden drei Aluminiumnitridpulver miteinander verglichen; und zwar ist das Pulver A das erfindungsgemäße Aluminiumnitrid, während die Pulver B und C im Handel erhältliche Aluminiumnitride sind (B hergestellt nach einem Verfahren der carbothermischen Nitridierung; C hergestellt nach einem Verfahren der Direktnitridierung). In der Tabelle sowie in den Beispielen 1 bis 8 wurde die spezifische Oberfläche nach der BET-Methode (vergl. Brunauer, Emmet, Teller in J. Amer. Chem. Soc., 60. Jahrgang, 1938, Seite 309) bestimmt, während die Kristallitgröße an Flachpräparaten mit dem PHILIPS-Pulverdiffraktometer APD 1700 (mit Graphit-Monochromator; $Cu_{K\alpha}$ - Strahlung) unter Verwendung der Reflexe 100, 002 und 101 gemessen und nach der Methode von SCHERRER gemäß der Gleichung

$$D = \frac{5,73 \cdot \lambda}{\cos \Theta \cdot \sqrt{B^2 - B_0^2}}$$

(D = Kristallitgröße in nm; $\lambda$ = 1,54178 A; $\Theta$ = Beugungswinkel; B = gemessene Reflexbreite; $B_0$ = Apparatekonstante = 0,075°)

ausgewertet wurde. Schließlich erfolgte die Bestimmung des Weißgrades mit dem ZEISS-Farbmeßgerät RFC 3 bei Wellenlängen zwischen 400 und 700 nm mit Bariumsulfat p.a. als Weißstandard.

3

|  | A | B | C |
|---|---|---|---|
| Gew.-% Stickstoff | 34,1 | 33,3 | 33,6 |
| spez. Oberfläche [m$^2$g$^{-1}$] | 15 | 4 | 4 |
| Kristallitgröße [nm] |  |  |  |
| 100 | 92 | 158 | 114 |
| 002 | 90 | 159 | 126 |
| 101 | 88 | 150 | 111 |
| Teilchendurchmesser nach REM [μm] | ~0,2 | ~1 | ~2 |
| Weißgrad bei |  |  |  |
| 400 nm | 92,6 | 86,5 | 67,9 |
| 500 nm | 96,8 | 87,7 | 66,7 |
| 600 nm | 96,3 | 88,9 | 68,0 |
| 700 nm | 96,0 | 89,6 | 69,6 |

Beispiel 1

In einem einseitig geschlossenen Drehbehälter wurden 5 g Aluminiumgranalien (Al > 99,99 %) und 100 g Monamminaluminiumchlorid (hergestellt nach G. Brauer: "Handbuch der präparativen anorganischen Chemie", 2. Band, 1978, Seite 829) auf 300° C unter Inertgas 1 Stunde erwärmt. Die Schmelze wurde vom Rest der Granalien abfiltriert und die Granalien zurückgewogen. Der Masseverlust der Granalien betrug 1,9 g, die Schmelze hatte 10 mol% Aluminium, bezogen auf eingesetztes Monamminaluminiumchlorid, aufgenommen. Aus der Schmelze wurde mit gasförmigen Ammoniak ein weißer Feststoff gefällt und das Monamminaluminiumchlorid bei 420° C abdestilliert. Der Rückstand wurde bis 1500° C im Ammoniakstrom getempert.
Ausbeute (bezogen auf metallisches Aluminium): 99 %.

| Analyse: | Al | 65,8 % | (Theoretischer Wert für AlN: 66,9 %) |
|---|---|---|---|
|  | N | 34,1 % | (Theoretischer Wert für AlN: 34,1 %) |
|  | Cl | 0,03 % |  |

Spezifische Oberfläche: 15 m$^2$g$^{-1}$

Beispiel 2

In einem einseitig geschlossenen Drehbehälter wurden 27 g Al-Granalien (Al > 99,99 %) und 150 g Monamminaluminiumchlorid unter Stickstoff auf 300° C erwärmt und nach Erreichen der Reaktionstemperatur wurden 15 g Ammoniak pro Stunde und Mol Monamminaluminiumchlorid eingeleitet. Aus der Schmelze fiel ein weißer Feststoff aus, während die Aluminium-Granalien mit der Zeit abreagierten. Die Temperatur wurde auf 420° C erhöht und das Monamminaluminiumchlorid abdestilliert. Zurück blieb ein weißes lockeres Pulver (nach Röntgenaufnahme: Aluminiumnitrid), das im Ammoniakstrom bis 1500° C getempert wurde.
Ausbeute (bezogen auf metallisches Aluminium): 98 %.

| Analyse: | Al | 65,8 % | (Theoretischer Wert für AlN: 65,9 %) |
|---|---|---|---|
| | N | 34,0 % | (Theoretischer Wert für AlN: 34,1 %) |
| | Cl | 0,03 % | |

Spezifische Oberfläche: 14 m²g⁻¹
Weißgrad (Mittel): 96 % (400 bis 700 nm)

Beispiel 3

In einem einseitig geschlossenen Drehbehälter wurden 15 g Aluminium-Granalien (Al > 99,99 %) und 150 g Monamminaluminiumchlorid unter Inertgas auf 320° C erwärmt. Aus der sich bildenden Schmelze wurde mit Ammoniak ein weißer Feststoff gefällt. Bei 420° C wurde des Monamminaluminiumchlorid abdestilliert. Das zurückbleibende lockere weiße Pulver wurde in einem Ammoniak-Stickstoffstrom (1 : 1) bis 1300° C getempert. Röntgenaufnahmen des Pulvers ab 420° C zeigen, daß es sich um Aluminiumnitrid handelte.
Ausbeute (bezogen auf metallisches Aluminium): 99 %.

| Analyse: | Al | 65,7 % | (Theoretischer Wert für AlN: 65,9 %) |
|---|---|---|---|
| | N | 33,8 % | (Theoretischer Wert für AlN: 34,1 %) |
| | Cl | 0,5 % | |

Spezifische Oberfläche: 45 m²g⁻¹
Kristallitgröße: (100) 56 nm, (002) 63 nm, (101) 56 nm

Beispiel 4

In einem Rührbehälter wurden 27 g Aluminiumspäne (Al > 99,99 %) und 150 g Monamminaluminiumchlorid unter Inertgas auf 280° C erwärmt. Aus der Schmelze wurde unter Zugabe von Ammoniak ein weißer Feststoff gefällt. Mit einer Ölpumpe wurde evakuiert und das Monamminaluminiumchlorid abdestilliert. Das zurückbleibende weiße Pulver wurde im Ammoniak strom bis 1500° C getempert.
Ausbeute (bezogen auf metallisches Aluminium): 60 %

| Analyse: | Al | 65,8 % | (Theoretischer Wert für AlN: 65,9 %) |
|---|---|---|---|
| | N | 34,1 % | (Theoretischer Wert für AlN: 34,1 %) |
| | Cl | 0,04 % | |

Spezifische Oberfläche: 12 m²g⁻¹
Kristallitgröße (100) 92 nm, (002) 90 nm, (101) 88 nm

Beispiel 5

Beispiel 4 wurde mit der Änderung wiederholt, daß anstelle der Aluminiumspäne Aluminiumpulver mit einer Körnung von etwa 165 μm eingesetzt wurde.
Ausbeute (bezogen auf metallisches Aluminium): 80 %

Beispiel 6

Beispiel 2 wurde mit der Änderung wiederholt, daß 7 g Ammoniak pro Stunde und Mol Monamminaluminiumchlorid eingeleitet wurden.
Die Reaktionsgeschwindigkeit verringerte sich dadurch und die Ausbeute betrug nur 70 %.

Beispiel 7

Beispiel 2 wurde mit der Änderung wiederholt, daß 30 g Ammoniak pro Stunde und Mol Monamminaluminiumchlorid eingeleitet wurden.

Die Reaktionsgeschwindigkeit war zu Beginn der Reaktion der im Beispiel 2 vergleichbar; die Ausbeute betrug jedoch nur 55 %.

Beispiel 8

In einem einseitig geschlossenen Drehbehälter wurden 27 g Al-Granalien (Al > 99,99 %) und 150 g Monamminaluminiumchlorid unter Stickstoff auf 330°C erwärmt. Nach Erreichen der Reaktionstemperatur und Bildung einer Schmelze wurden 15 g Ammoniak pro Stunde und Mol Monamminaluminiumchlorid eingeleitet, wonach aus der Schmelze Aluminiumnitrid ausfiel, während die Al-Granalien mit der Zeit abreagierten. Nach der Ausfällung des Aluminiumnitrids wurde in die Schmelze soviel Ammoniak eingeleitet, daß pro Mol Monamminaluminiumchlorid 2,2 Mol Ammoniak aufgenommen wurden. Dann wurde die Schmelze im Ammoniakstrom auf 420°C erwärmt und eingeengt. Der Rückstand wurde im Ammoniakstrom bei 1300°C getempert.

Es wurden Agglomerate von $d_{50} \sim 2,5 \mu$m mit Primärteilchengrößen von $d_{50} \sim 0,2 \mu$m erhalten.

Beispiel 9

Beispiel 8 wurde mit der Änderung wiederholt, daß in die Schmelze nach Ausfällung des Aluminiumnitrids nur soviel Ammoniak eingeleitet wurde, daß pro Mol Monamminaluminiumchlorid 0,5 Mol Ammoniak aufgenommen wurde. Nach Erwärmen der Schmelze im Ammoniakstrom auf 420°C wurde sie eingeengt. Der Rückstand wurde im Ammoniakstrom bei 1300°C getempert.

Es wurden Agglomerate von $d_{50} \sim 35 \mu$m erhalten.

**Ansprüche**

1. Aluminiumnitridpulver, gekennzeichnet durch eine pulverdiffraktometrisch gemessene und nach der Methode von Scherrer ausgewertete Kristallitgröße von 40 bis 150 nm, vorzugsweise 70 bis 120 nm, eine Primärteilchengröße von 0,1 bis 0,5 $\mu$m, eine spezifische Oberfläche nach BET von 5 bis 50 m$^2$/g und einen Weißgrad von mehr als 91 %, gemessen mit Licht einer Wellenlänge von 400 bis 700 nm gegen Bariumsulfat p.a. als Weißstandard.

2. Verfahren zur Herstellung von Aluminiumnitridpulver nach Anspruch 1, wobei man metallisches Aluminium zusammen mit Monamminaluminiumchlorid [AlCl$_3$)NH$_3$)] in Inertgasatmosphäre bei Temperaturen oberhalb von 125°C aufschmilzt und unter Wasserstoffentwicklung miteinander reagieren läßt, dadurch gekennzeichnet, daß man der aluminiumhaltigen Monoamminaluminiumchlorid-Schmelze bei Temperaturen zwischen 250 und 400°C, vorzugsweise zwischen 280 und 360°C, pro Mol Monamminaluminiumchlorid 8 bis 20 g, vorzugsweise 12 bis 15 g Ammoniak pro Stunde unter Ausfällung von Aluminiumnitrid als Feststoff bis zum vollständigen Umsatz des Aluminiums zuführt und daß man schließlich die Temperatur der Schmelze auf mehr als 400°C, vorzugsweise auf 420 bis 600°C erhöht.

3. Verfahren nach Anspruch 2, dadurch gekennzeichnet, daß man der Monamminaluminiumchlorid-Schmelze soviel metallisches Aluminium zusetzt, daß das Molverhältnis Aluminium zu Monamminaluminiumchlorid 0,5 bis 1,2, vorzugs weise 0,9 bis 1,1 beträgt und daß man das Einleiten von Ammoniak in die festes metallisches Aluminium enthaltende Schmelze so lange fortsetzt, bis das gesamte der Schmelze zugesetzte metallische Aluminium unter gleichzeitiger Ausfällung von Aluminiumnitrid von der Schmelze aufgenommen worden ist und sich mit dem Ammoniak zu Aluminiumnitrid umgesetzt hat.

4. Verfahren nach Anspruch 3, dadurch gekennzeichnet, daß man unter Einhaltung eines Molverhältnisses von Gesamt-Aluminium zu Gesamt-Monamminaluminiumchlorid von (0,5 bis 1,2) : 1 im Reaktionssystem 30 bis 70 Mol% des Monamminaluminiumchlorids durch Aluminiumchlorid oder Ammoniumchlorid oder deren Mischungen ersetzt.

5. Verfahren nach mindestens einem der Ansprüche 2 bis 4, durch gekennzeichnet, daß man pro Zeiteinheit nur soviel Ammoniak zuführt, daß die Ammoniakkonzentration im entweichenden Wasserstoff weniger als 0,3 % und der Ammoniaküberschuß in der Schmelze nach vollständigem Aluminiumsatz maximal 0,5, vorzugsweise weniger als 0,2 Mol Ammoniak pro Mol Monamminaluminiumchlorid beträgt.

6. Verfahren nach mindestens einem der Ansprüche 2 bis 4, dadurch gekennzeichnet, daß man der Monamminaluminiumchlorid-Schmelze nach vollständigem Umsatz des Aluminiums soviel Ammoniak zuführt, daß pro Mol eingesetztem Monamminaluminiumchlorid 1 bis 3, vorzugsweise 1,5 bis 2,5 Mol Ammoniak aufgenommen werden, bevor die Temperatur auf über 400°C erhöht wird.

7. Verfahren nach mindestens einem der Ansprüche 2 bis 6, dadurch gekennzeichnet, daß man das Aluminium in Form von Stäben, Blöcken oder Granalien einsetzt.

8. Verfahren nach mindestens einem der Ansprüche 2 bis 7, dadurch gekennzeichnet, daß man das ausgefällte Aluminiumnitrid von der Monamminaluminiumchlorid-Schmelze durch Filtration abtrennt.

9. Verfahren nach mindestens einem der Ansprüche 2 bis 7, dadurch gekennzeichnet, daß man das geschmolzene Monamminaluminiumchlorid vom ausgefällten Aluminiumnitrid abdestilliert.

10. Verfahren nach Anspruch 9, dadurch gekennzeichnet, daß man das Abdestillieren des Monamminaluminiumchlorids im Vakuum oder unter Inertgas unter Ausbildung von Aluminiumnitrid-Agglomeraten mit $d_{50} > 10 \mu m$ vornimmt.

11. Verfahren nach Anspruch 6 oder 9, dadurch gekennzeichnet, daß man das Abdestillieren des Monamminaluminiumchlorids unter Ammoniak unter Ausbildung von Aluminiumnitrid-Agglomeraten mit $d_{50} < 10 \mu m$, vorzugsweise < 5 $\mu m$, vornimmt.

12. Verfahren nach Anspruch 8 oder 9, dadurch gekennzeichnet, daß man das abgetrennte Aluminiumnitrid bei Temperaturen zwischen 400 bis 1500°C tempert.

13. Verfahren nach Anspruch 12, dadurch gekennzeichnet, daß man die Temperung unter Inertgas oder Ammoniak oder deren Mischungen vornimmt.

7